# EUROPÄISCHE PATENTANMELDUNG

(11) **EP 1 840 098 A2**
(43) Veröffentlichungstag der Anmeldung: **03.10.2007**
(21) Anmeldenummer: 07005101.6
(22) Anmeldetag: 13.03.2007
(51) Int. Cl.: C04B 24/38, C04B 28/02

(54) **Methylstärkeether in mineralische Baustoffen**

(30) Priorität: 24.03.2006 DE 102006013786; 03.06.2006 DE 102006026138
(71) Anmelder: Wolff Cellulosics GmbH & Co.KG, 29656 Walsrode (DE)
(72) Erfinder: Wolbers, Peter, Dr., 29664 Walsrode (DE); Böhme, Karsten, Dr., 29664 Walsrode (DE); Bayer, Roland, Dr., 29664 Walsrode (DE)
(74) Vertreter: polypatent

(57) **Zusammenfassung**

Die vorliegende Erfindung betrifft die Verwendung von methylierter Stärke in mineralischen Baustoffen.

## Beschreibung

Die vorliegende Erfindung betrifft die Verwendung von methylierter Stärke in mineralischen Baustoffen.

Verfahren zur Derivatisierung von Stärke zur Herstellung der entsprechenden Ether oder Ester sind in der Fachwelt an sich bekannt und beispielsweise in O.B. Wurzburg, Modified Starches: Properties and Uses, CRC Press Inc., Boca Raton, Florida, Kapitel 4 bis 6 beschrieben. Bevorzugte Modifizierungsreaktion ist die Etherbildung durch Umsetzung mit Alkylenoxiden, wobei Propylenoxid bevorzugt ist.

Die Methylierung von Stärke unter Erhalt von Methylstärkeethern ist hinlänglich bekannt und erfolgt typischerweise durch Umsetzung mit Methylhalogenid (DE-A 290 00 73) oder Dimethylsulfat (DD 54684).

Im Rahmen von mineralischen Baustoffen wie Gips, Zement, Putz oder Fliesenklebern werden Stärkeether bereits verwendet, wobei im wesentlichen die Hydroxyalkylderivate zum Einsatz kommen, welche auch mit Cellulosederivaten kombiniert eingesetzt werden (GB-A 1085033, EP-A 530 768, EP-A 955 277, EP-A 117 431, EP-A 773 198, EP-A 824 093, EP-A 816 299).

Aus US 4 654 085 ist der Einsatz von hydroxypropylierten Stärkeethern als Additiv für zementäre Systeme bekannt. Dabei kommt eine Mischung aus Celluloseether, Stärkeether und Polyacrylamiden zum Einsatz. Als Stärkeether werden in unspezifischen Listen auch Methylstärke, Ethylstärke, Propylstärke, Hydroxyalkylstärke (HPS, HES) sowie deren Mischether erwähnt. Bevorzugt sind die Hydroxypropylstärkeether.

Insbesondere im Bereich von Fliesenklebern weisen solche Hydroxypropylstärkeether-basierten Baustoffe allerdings verbesserungswürdige Anfangsfestigkeiten und Abbindezeiten auf.

Aufgabe der vorliegenden Erfindung war es nun mineralische Baustoffzusammensetzungen, bevorzugt Fliesenkleber, bereitzustellen, welche ein verbessertes Abbindeverhalten sowie höhere Anfangsfestigkeiten aufweisen und so besser und flexibler in der Praxis appliziert werden können.

Gelöst wurde diese Aufgabe nun durch den Einsatz von reinen Methylstärkeethern und/oder Mischethern der Stärke mit Methylether- und weiteren Alkylether- und/oder Hydroxyalkylethergruppen.

Gegenstand der Erfindung sind Baustoffzusammensetzungen enthaltend eine Stärkeetherkomponente, welche wenigstens Methylstärkeether und/oder Mischether der Stärke mit Methylether- und weiteren Alkylether- und/oder Hydroxyalkylethergruppen enthält.

Der Begriff "Baustoffzusammensetzungen" ist dem Fachmann geläufig. Im Rahmen der vorliegenden Erfindung werden hierunter bevorzugt mineralisch gebundene oder dispersionsgebundene Systeme, wie Hand- und Maschinenputze z.B. auf Gips-, Kalkhydrat- oder Zementbasis, Mörtel, Fliesenkleber, Spritzbetonmassen, Fussbodenausgleichsmassen, Zement- und Kalksandsteinextrudate, Fugenfüller und Spachtelmassen verstanden. Besonders bevorzugt sind dies zementäre, gipshaltige und kalkhaltige Systeme der vorstehend genannten Art, ganz besonders bevorzugt Fliesenkleber.

Methylstärkeether sind die Methylierungsprodukte, wie sie durch Umsetzung von Stärke mit Methylierungsreagenzien wie Methylhalogeniden oder Dimethylsulfat erhalten werden.

Mischether der Stärke mit Methylether- und weiteren Alkylether- und/oder Hydroxyalkylethergruppen sind Stärkederivate wie sie durch Methylierung und vorherige, gleichzeitige oder anschlie-ßende Alkylierung und/oder Hydroxyalkylierung erhalten werden können.

Bei der Alkylierung während der Herstellung der Mischether werden bevorzugt Alkylhalogenide wie Ethylchlorid eingesetzt. Bei der Hydroxyalkylierung werden Alkylenoxide wie Ethylen- oder Propylenoxid bevorzugt eingesetzt.

Als Ausgangsmaterial können alle dem Fachmann bekannten Stärkequellen verwendet werden. Bevorzugt werden Stärken eingesetzt, welche einen Amyloseanteil von weniger als 20 Gew.-%, bevorzugt weniger als 10 Gew.-%, besonders bevorzugt weniger als 5 Gew.-% und ganz besonders bevorzugt weniger als 2 Gew.-% bezogen auf die gesamte Stärkemenge aufweisen.

Der Amyloseanteil der Stärke wird üblicherweise durch UV/VIS Messungen an Stärke/Iod-Einschlusskomplexen bestimmt. Dies ist eine dem Fachmann an sich bekannte Routinemethode.

Methylstärken und deren Mischether können durch Veretherung von Stärke mit an sich bekannten Veretherungsmitteln wie Dimethylsulfat oder Methylchlorid in Anwesenheit von Basen wie NaOH hergestellt werden.

Im Fall der Mischether wird zusätzlich noch Alkylenoxid wie Ethylenoxid oder Propylenoxid zugesetzt.

Zur Vermeidung von oxidativem Abbau wird der Sauerstoff zweckmäßigerweise durch Evakuieren und Spülen mit Stickstoff aus dem Reaktionsgemisch entfernt.

Der Substitutionsgrad (DS) der Produkte wird über die Einsatzmenge an Base, bevorzugt Natronlauge, gesteuert. NaOH kann dabei als wässrige Lösung oder in fester Form (NaOH - Prills oder Schuppen) verwendet werden.

Da bei den Reaktionsbedingungen der Veretherung die Veretherungsreagenzien in der Regel gasförmig sind, wird die Umsetzung zweckmäßigerweise in einem gegebenenfalls gerührten Autoklaven oder Druckreaktor durchgeführt.

Zusätzlich zu den vorstehend genannten Reaktanden können auch inerte Suspensionsmittel wie Isopropanol oder Dimethylether verwendet werden.

Die Dosierung der Reaktanden kann in beliebiger Reihenfolge, über einen beliebigen Zeitraum komplett oder geteilt in mehreren Schritten erfolgen.

Die Reaktionstemperatur beträgt typischerweise 45°C bis 140°C, bevorzugt 50°C bis 80°C, besonders bevorzugt 50°C bis 65°C.

Die Reaktionszeiten bis zum Erreichen des gewünschten Veretherungsgrads betragen typischerweise 30 bis 400 min, bevorzugt 30 bis 300 min.

Nach Beendigung der Umsetzung werden die Stärkeether in einem inerten Suspensionsmittel, z.B. Aceton, suspendiert und mit einer Säure neutralisiert. Die so erhaltenen Stärkeether werden anschließend getrocknet und gegebenenfalls gemahlen.

Die Methylstärkeether bzw. die entsprechenden Mischether haben typischerweise einen Substitutionsgrad (DS) bezogen auf die Methylierung von 0,1 bis 3, bevorzugt 0,15 bis 2,0, besonders bevorzugt 0,2 bis 1,5 und ganz besonders bevorzugt 0,2 bis 0,8.

Die Methylstärkeether bzw. die entsprechenden Mischether haben typischerweise einen Substitutionsgrad (DS) bezogen auf die Hydroxyalkylierung von 0,01 bis 5, bevorzugt 0,05 bis 2, besonders bevorzugt 0,1 bis 1.

Zur Bestimmung der Substitutionsgrade wird der Stärkeether mit heißer, konzentrierter Iodwasserstoffsäure umgesetzt (Zeisel-Spaltung) und die entstehenden Alkyliodide und Alkylene gaschromatographisch getrennt und analysiert.

Die erfindungsgemäß eingesetzten Stärkeether der vorstehend genannten Art haben bevorzugt Viskositäten bei 25°C gemessen mit einem Brookfield-Rotationsviskosimeter mit 100 UpM anhand einer 5 gew.-%igen wässrigen Lösung von 100 bis 6000 mPas, besonders bevorzugt 150 bis 5500 mPas, ganz besonders bevorzugt von 500 bis 5100 mPas.

Ein weiterer Gegenstand der Erfindung sind Stärkeether mit Methylethergruppen, welche eine Viskosität entsprechend der vorstehend genannten Bereiche aufweisen.

Bevorzugt basieren sie auf Stärke mit den vorstehend genannten Höchstmengen an Amylose.

In den erfindungsgemäßen Baustoffzusammensetzungen sind die vorstehend beschriebenen erfindungswesentlichen Methylstärkeether bzw. -mischether in Mengen enthalten von 0,001 bis 20 Gew.-%, bevorzugt 0,001 bis 5 % Gew.-% bezogen auf die Gesamttrockenmasse.

In einer bevorzugten Ausführungsform sind in der Stärkeetherkomponente ausschließlich Stärkeether der vorstehend genannten Art mit Methylether- und gegebenenfalls Alkyl- und/oder Hydroxyalkylethergruppen in den erfindungsgemäßen Baustoffzusammensetzungen enthalten.

Neben den erfindungswesentlichen Stärkeethern können die Baustoffzusammensetzungen auch Cellulosederivate wie Methylcellulosen, Ethylcellulosen, Hydroxypropylmethylcellulosen, Hydroxyethylmethylcellulosen, Hydroxypropylcellulosen, Hydroxyethylcellulosen enthalten.

Ferner können die Baustoffzusammensetzungen Zusatzstoffe und/oder Modifizierungsmittel enthalten. Dies können zum Beispiel Hydrokolloide, Kunststoffdispersionspulver, Entschäumer, Quellmittel, Füllstoffe, Leichtstoffzusatzstoffe, Polyacrylate, Polyacrylamide, Hydrophobierungsmittel, Luftporenbildner, synthetische Verdicker, Dispergierhilfsmittel, Verflüssiger, Verzögerer, Beschleuniger oder Stabilisatoren sein. Ferner sind Füllstoffe wie Quarzsand, Dolomit, Kalksandstein, Calciumsulfat-Dihydrat als Zusatzstoffe und/oder Modifizierungsmittel geeignet.

Ein weiterer Gegenstand der Erfindung sind Formkörper und Aufbauten erhältlich unter Verwendung der erfindungsgemäßen Baustoffzusammensetzungen.

### Beispiele:

Die Viskositäten wurden mit einem Brookfield-Rotationsviskosimeter mit 100 UpM bei einer Temperatur von 25°C gemessen.

### Beispiel 1: Herstellung von Methylstärkeethern

1,5 mol Wachsmaisstärke wurden in einem 5 L Rührautoklaven vorgelegt und 3-mal durch evakuieren und belüften mit Stickstoffgas inertisiert. Im Anschluss daran wurden 0,855 mol einer 50 gew.-%igen Natronlauge sowie 8,73 mol Methylchlorid in den Autoklaven gegeben und 30 min bei einer Temperatur von 25°C gerührt. Innerhalb von 30 min wurde dann auf 60°C aufgeheizt und bei dieser Temperatur 150 min reagieren gelassen. Nach dem Entfernen von nicht reagiertem Methylchlorid wurde der Stärkeether entnommen und in Aceton mit Ameisensäure neutralisiert, getrocknet und gemahlen. Der als weißes Pulver vorliegende Stärkeether hatte einen DS bezogen auf die Methyletherguppen von 0,52 und eine Viskosität einer 5 gew.-%igen Lösung in Wasser (V5 Viskosität) von 2500 mPas bei 25°C.

### Beispiel 2: Herstellung von Methylhydroxyethylstärkeethern

1,5 mol Wachsmaisstärke wurden in einem 5 L Rührautoklaven vorgelegt und 3-mal durch evakuieren und belüften mit Stickstoffgas inertisiert. Im Anschluss daran wurden 0,9 mol einer 50 gew.-%igen Natronlauge sowie 8,73 mol Methylchlorid in den Autoklaven gegeben und 30 min bei einer Temperatur von 25°C gerührt. Es wurden 1,5 mol Ethylenoxid dosiert, danach innerhalb von 30 min auf 60°C aufgeheizt und bei dieser Temperatur 300 min reagieren gelassen. Nach dem Entfernen von nicht reagiertem Methylchlorid und Ethylenoxid wurde der Stärkeether entnommen und in Aceton mit Ameisensäure neutralisiert, getrocknet und gemahlen. Der als weißes Pulver vorliegende Stärkeether hatte einen DS bezogen auf die Methyletherguppen von 0,56, einen MS bezogen auf Hydroxyalkylgruppen von 0,7 und eine Viskosität einer 5 gew.-%igen Lösung in Wasser (V5 Viskosität) von 4300 mPas bei 25°C.

### Beispiele 3 bis 6: Herstellung von Methylhydroxypropylstärkeethern

4 mol Wachsmaisstärke wurden in einem 5 L Rührautoklaven vorgelegt und 3-mal durch evakuieren und belüften mit Stickstoffgas inertisiert. Im Anschluss daran wurden 2,4 mol einer 50 gew.-%igen Natronlauge, 17,87 mol Dimethylether sowie 6,96 mol Methylchlorid in den Autoklaven gegeben und 30 min bei einer Temperatur von 25°C gerührt. Es wurden 3,2 mol Propylenoxid dosiert, danach innerhalb von 30 min auf 50°C aufgeheizt. Nach 240 min Reaktionszeit bei dieser Temperatur wurde innerhalb von 40 min auf 70°C aufgeheizt und bei dieser Temperatur weitere 30 min reagieren gelassen. Nach dem Entfernen von nicht reagiertem Methylchlorid und Propylenoxid wurde der Stärkeether entnommen und in Aceton mit Ameisensäure neutralisiert, getrocknet und gemahlen. Der als weißes Pulver vorliegende Stärkeether hatte einen DS bezogen auf die Methyletherguppen von 0,21, einen MS bezogen auf Hydroxyalkylgruppen von 0,2 und eine Viskosität einer 5 gew.%igen Lösung in Wasser (V5 Viskosität) von 968 mPas bei 25°C.

Alle Synthesen sind nach der gleichen Fahrweise mit den in Tabelle 1 aufgeführten Mengen gefahren worden.

| Bsp. | Stärke | MCl | PO | DS | MS | V 5 | Suspensionsmittel | |
|---|---|---|---|---|---|---|---|---|
| | [mol] | [mol] | [mol] | (M) | (HP) | [mPas] | [mol] | |
| 3 | 4,0 | 4,0 | 3,2 | 0,35 | 0,33 | 778 | Isopropanol | 12,3 |
| 4 | 4,0 | 6,96 | 3,2 | 0,21 | 0,20 | 968 | Dimethylether | 17,8 |
| 5 | 4,0 | 23,4 | 3,2 | 0,70 | 0,18 | 663 | | |
| 6 | 4,0 | 4,0 | 3,2 | 0,16 | 0,19 | 518 | Dimethylether | 21,1 |

### Anwendungstechnische Ausprüfung

Die in den Beispielen 1 bis 6 hergestellten Methylstärkeether wurden mit einem handelsüblichen, vernetzten Hydroxypropylstärkeether verglichen.

Der Ausprüfung wurde ein Fliesenkleber folgender Zusammensetzung zugrunde gelegt:
- 35,0 Gew.-%: Milke-Zement CEM I 52,5R (Anneliese-Zement, Geseke, DE) v. 06/05
- 31,1 Gew.-%: Quarzsand F36 (Quarzwerke Frechen, DE) v. 11/04
- 31,5 Gew.-%: Quarzsand FH31 abgesiebt < 0,5mm (Quarzwerke Frechen, DE) v. 11/04
- 2,0 Gew.-%: Vinnapas RE 5028N (Wacker Polymer Systems, Burghausen, DE)
- 0,40 Gew.-%: Arbocell BWW40 (Rettenmaier, Holzmühlen, DE) v. 03/05
- 0,45 Gew.-%: Mischung aus 75 Gew.-% modifizierter Methylcellulose und 25 Gew.-% des zu untersuchenden Stärkeethers

Als modifizierte Methylcellulose wurde eine MHEC 15000 PF mit einem DS (M) von 1,8 und einem MS (HE) von 0,15 der Wolff Cellulosics GmbH (Walsrode, DE) verwendet.

Die Bestimmungen erfolgen bei einer Luftfeuchtigkeit von 50 ± 5% , einer Temperatur 23 ± 2°C und einer Luftbewegung am Prüfgut < 0,2 m/s.

Die bezeichneten Mengen an Trockensubstanz wurden in einem Polybeutel abgewogen und ca. 5 min per Hand gut durch mehrfaches Schütteln homogen durchmischt, wobei etwaige Zementklumpen vorher zerdrückt wurden.

Die Herstellung der Mörtelmischung erfolgte entsprechend der EN-Norm 1348, Abschnitt 7. Hierzu wurde im Toni-Mischer die erforderliche Wassermenge im Mischertrog vorgelegt und 1,5 kg des trockenen Fliesenklebers innerhalb von ca. 15 s in die Flüssigkeit eingestreut. Unter zwischenzeitlichen Abstreifen der Rührschaufel wurde das Material dann 90 Sekunden gerührt und anschließend 10 Min reifen gelassen. Danach wurde das Material nochmals für 15 Sekunden aufgerührt.

3 Minuten nach Anrührende wurde der Nassmörtel mit einem Löffel in den Messtopf eingefüllt. Die Bestimmung der Konsistenz erfolge mit Hilfe eines Brookfield Viskosimeters und einer Helipath Spindel: T - F; 100 UpM. Angegeben wird der Mittelwert aus 7 Messungen in Pas.

Bei der Bestimmung der Abrutschfestigkeit eines Fliesenklebers wurde der Fliesenkleber auf eine Abrutschplatte [Höhe 220 mm; 200 x 250 mm Material PVC] aufgekämmt [Kammspachtel 4 x 4 mm]. Dann wurde mit einer zuvor gewogenen Fliese [Steinzeugfliese 10 x 10 cm; 200 g] und Zusatzgewichten [Gewicht je 50 g] das maximale Gewicht einer Fliese ermittelt, die vom Kleber gerade noch gehalten wurde. Angegeben wird das Abrutschen der Fliese nach 30 s ohne Zusatzgewicht in mm und das maximale Fliesengewicht in Gramm pro cm² [g/cm²].

Die Resultate der Konsistenzbestimmung und der Abrutschfestigkeit sind in Tabelle 2 zusammengefasst. Aufgrund der Vernetzung des handelsüblichen Stärkeethers ist die Viskositätsergiebigkeit dieses Stärkederivats am höchsten. Überraschenderweise zeigen die unvernetzten Methylstärken bei niedrigeren W/F-Faktoren dennoch vergleichbare niedrige Abrutschwerte und hohe zusätzliche Gewichte, bevor die Fliese zu Rutschen beginnt.

Bei der Bestimmung der Offenzeit wurde die Zeitspanne ermittelt, in der es möglich ist, in ein aufgekämmtes Fliesenkleberbett Fliesen nach definierter Zeit [5/10/15/20/25/30 min] einzulegen und später wieder abzunehmen. Anschließend wurde die Benetzung der Rückseite der Fliesen beurteilt. Für die Durchführung der Untersuchung wurde der Fliesenkleber mit einem Kammspachtel [6 x 6 mm] aufgekämmt. Nach 5 Minuten wurde die erste Fliese eingelegt und für 30 s mit einem 2 kg Gewicht belastet. Im Abstand von 5 Minuten wurden anschließend weitere Fliesen eingelegt und ebenfalls 30 Sekunden mit 2 kg belastet. Nach 40 Minuten wurden alle Fliesen abgenommen und umgedreht. Die Benetzung der Fliesenrückseite mit Fliesenkleber wurde mit einer Gitterfolie in Prozent angegeben. Als Offenzeit wurde die Zeit in Minuten angegeben, bei der Werte von mehr als 50 % Kleber auf der Fliesenrückseite festgestellt werden.

Geprüft wurde ferner der Abbindeverlauf vom Anrühren eines Fliesenklebers über den Abbindebeginn bis zum Abbindeende. Über das Eindringen einer Nadel [automatisches Penetrometer nach Vicat] in den Fliesenkleber wurde die Abbindezeit ermittelt. Für die Durchführung der Untersuchungen wurde der Kleber nach dem Anrühren luftblasenfrei unter leichtem Stochern in einen Kunststoffbecher [∅ innen 93 mm, h = 38 mm] gefüllt. Anschließend wurde die Oberfläche ohne Druck unter sägender Bewegung mit einem breiten Spachtel plan abgezogen. Bevor die Probenobenfläche mit Paraffinöl abgedeckt wurde, bestreicht man den äußeren Rand etwa 0,5 cm dick mit Fliesenkleber, um so ein Herunterlaufen des Öls zu vermeiden. Das Öl verhindert die Hautbildung und das Anhaften von Fliesenklebermaterial an der Prüfnadel. Die Abbindedauer wurde dann als Zeitintervall bestimmt, innerhalb dem die Eindringtiefe von 36 mm zu Beginn auf 2 mm abgenommen hat. Die Resultate der Offenzeit und des Abbindeverhaltens sind in Tabelle 2 zusammengefasst. Bei vergleichbaren Offenzeit der Fliesenkleber beginnt die Abbindung der mit Methylstärken additivierten Fliesenkleber deutlich früher und ist auch zeitlich verkürzt.

Die Bestimmung der Haftzugfestigkeiten nach 24 h und nach 7 Tagen Lagerung bei Normklima erfolgte nach EN 1348.

Die Verkürzung der Abbindezeit in den Fliesenklebern, die mit Methylstärken additiviert wurden, verbessert auch die Haftzugfestigkeiten nach 24 h. Diese sind im Vergleich zu einer handelsüblichen, vernetzten HPS deutlich verbessert, was eine frühere Belastung der Materialien erlaubt.

| | **Vergleich** | **Beispiel 1** | **Beispiel 4** |
|---|---|---|---|
| Stärkeether | HPS | MS | MHPS |
| Einsatzmenge MC [Gew.-%] | 0,45 | 0,45 | 0,45 |
| Wasser/ Feststoff [Gew.-%] | 0,305 | 0,29 | 0,285 |
| Brookfieldviskosität @ 25°C [Pas] | 462 | 420 | 455 |
| Dichte [g/ cm³] | 1,58 | 1,58 | 1,58 |

| **Abrutschtest** | | | |
|---|---|---|---|
| nach 30 s [mm] | 0,6 | 0,8 | 0,6 |
| Zus. Gewicht bis Rutschen [g] | 200 | 150 | 150 - 200 |
| Max. Fliesengewicht [g/ cm²] | 3 | 2,5 | 2,5 -3,0 |

| **Offenzeit [%]** | | | |
|---|---|---|---|
| Nach 5 min | 100 | 100 | 100 |
| Nach 10 min | 95 | 95 | 100 |
| Nach 15 min | 95 | 95 | 100 |
| Nach 20 min | 95 | 95 | 75 |
| Nach 25 min | 95* | 90* | 60* |
| Nach 30 min | 85 | 75 | 70 |

| **Abbindeverhalten** | | | |
|---|---|---|---|
| Beginn [min] | 893 | 635 | 575 |
| Ende [min] | 1036 | 717 | 689 |
| Dauer [min] | 143 | 82 | 114 |

| **Haftfestigkeiten** | | | |
|---|---|---|---|
| 24 h Normklima [N/ mm²] | 0,27 | 0,7 | 0,4 |
| 7 Tage Normklima [N/ mm²] | 1,2 | 1,5 | 1,4 |

| | | | |
|---|---|---|---|
| * Beginn der Hautbildung | | | |

## Patentansprüche

1. Baustoffzusammensetzungen enthaltend eine Stärkeetherkomponente, welche wenigstens Methylstärkeether und/oder Mischether der Stärke mit Methylether- und weiteren Alkylether- und/oder Hydroxyalkylethergruppen enthält.

2. Baustoffzusammensetzungen gemäß Anspruch 1, **dadurch gekennzeichnet, dass** diese neben der Stärkeetherkomponente keine weiteren stärkebasierenden Verbindungen enthalten.

3. Baustoffzusammensetzungen gemäß Anspruch 1 oder 2, **dadurch gekennzeichnet, dass** dies mineralisch gebundenene oder dispersionsgebundenene Systeme sind, ausgewählt aus der Gruppe bestehend aus Hand- und Maschinenputz auf Gips-, Kalkhydrat- oder Zementbasis, Mörtel, Fliesenkleber, Spritzbetonmasse, Fussbodenausgleichsmasse, Zement- und Kalksandsteinextrudat, Fugenfüller und Spachtelmasse.

4. Baustoffzusammensetzungen gemäß einem der Ansprüche 1 bis 3, **dadurch gekennzeichnet, dass** die Methylstärkeether und/oder Mischether der Stärke auf Stärketypen basieren, die einen Amyloseanteil von weniger als 10 Gew.-% bezogen auf die gesamte Stärkemenge aufweisen.

5. Baustoffzusammensetzungen gemäß einem der Ansprüche 1 bis 4, **dadurch gekennzeichnet, dass** die Verbindungen der Stärkeetherkomponente einen Substitutionsgrad (DS) bezogen auf die Methylierung von 0,2 bis 1,5 aufweisen.

6. Baustoffzusammensetzungen gemäß einem der Ansprüche 1 bis 5, **dadurch gekennzeichnet, dass** Verbindungen der Stärkeetherkomponente einen Substitutionsgrad (MS) bezogen auf die Hydroxyalkylierung von 0,1 bis 1 aufweisen.

7. Baustoffzusammensetzungen gemäß einem der Ansprüche 1 bis 6, **dadurch gekennzeichnet, dass** die Verbindungen der Stärkeetherkomponente als 5 gew.-%ige wässrige Lösung eine Viskosität bei 25°C gemessen mit einem Brookfield-Rotationsviskosimeter mit 100 UpM von 150 bis 5500 m Pas aufweisen.

8. Baustoffzusammensetzungen gemäß einem der Ansprüche 1 bis 7, **dadurch gekennzeichnet, dass** die Verbindungen der Stärkeetherkomponente in den Baustoffzusammensetzungen in Mengen von 0,001 bis 5 Gew.-% bezogen auf die Gesamttrockenmasse enthalten sind.

9. Methylethergruppen enthaltende Stärkeether, wobei deren 5 gew.-%ige wässrige Lösung eine Brookfield-Viskosität von 900 bis 5100 m Pas aufweist, gemessen mit einem Rotationsviskosimeter mit 100 UpM bei 25°C.

10. Methylethergruppen enthaltende Stärkeether gemäß Anspruch 9, **dadurch gekennzeichnet, dass** sie einen Amyloseanteil von weniger als 10 Gew.-% bezogen auf den gesamten Stärkeether aufweisen.

11. Formkörper und Aufbauten erhältlich unter Verwendung von Baustoffzusammensetzungen gemäß einem der Ansprüche 1 bis 8.
